# EUROPÄISCHE PATENTSCHRIFT

(11) **EP 1 658 324 B1**
(45) Veröffentlichungstag und Bekanntmachung des Hinweises auf die Patenterteilung: **23.04.2014**
(21) Anmeldenummer: 04764396.0
(22) Anmeldetag: 23.08.2004
(51) Int. Cl.: C08L 23/04, C08K 5/00

(54) **THERMOCHROME POLYMERSCHICHT UND VERFAHREN ZU DEREN HERSTELLUNG**
THERMOCHROMIC POLYMER LAYER AND METHOD FOR PRODUCING SAID LAYER
COUCHE POLYMERIQUE THERMOCHROMIQUE ET SON PROCEDE DE PRODUCTION

(30) Priorität: 25.08.2003 DE 10339442
(43) Veröffentlichungstag der Anmeldung: 24.05.2006
(73) Patentinhaber: Fraunhofer-Gesellschaft zur Förderung der angewandten Forschung e.V., 80686 München (DE)
(72) Erfinder: SEEBOTH, Arno, 12557 Berlin (DE); KRIWANEK, Jörg, 13156 Berlin (DE); LÖTZSCH, Detlef, 10629 Berlin (DE)
(74) Vertreter: Pfenning, Meinig & Partner GbR
(86) Internationale Anmeldenummer: PCT/EP2004/009415
(87) Internationale Veröffentlichungsnummer: WO 2005/021627

(56) Entgegenhaltungen:
- EP-A- 1 211 300
- WO-A-02/08821
- PATENT ABSTRACTS OF JAPAN Bd. 1998, Nr. 01, 30. Januar 1998 (1998-01-30) -& JP 09 235545 A (MITSUBISHI CHEM CORP), 9. September 1997 (1997-09-09)
- DATABASE WPI Section Ch, Week 200356 Derwent Publications Ltd., London, GB; Class A89, AN 2003-594820 XP002308430 & KR 2003 016 589 A (SUNTECH CO LTD) 3. März 2003 (2003-03-03)

## Beschreibung

Die Erfindung betrifft eine thermochrome Polymerfolie sowie ein Verfahren zu deren Herstellung. Das Verfahren beruht auf einer Extrusion unter Zumischung eines thermochromen Farbstoffes und ggf. weiterer Zusatzstoffe zu Beginn des Extrusionsverfahrens und anschließende Extrusion zur thermochromen Polymerfolie. Weiterhin betrifft die Erfindung ein mehrlagiges Verbundsystem aus mindestens einer thermochromen Polymerfolie sowie mindestens einer weiteren Folie.

Thermochromie beinhaltet die Eigenschaft eines Materials in Abhängigkeit der Temperatur reversibel oder irreversibel seine Farbe zu ändern. Dies kann sowohl durch Änderung der Intensität und/oder des Wellenlängenmaximums erfolgen. Umfassend werden Beispiele und theoretische Hintergründe beschrieben in Chromic Phenomena von Peter Bamfield (The Royal Society of Chemistry, 2001) oder in Thermochromic Polymers von A. Seeboth and D. Lötzsch (Encyclopedia of Polymer Science and Technology, John Wiley & Sons, Inc. 2003).

Die Anwendung für polymere Flachfolien bestehend aus Polyethylen, Polypropylen, Polyesterderivaten oder einer Vielzahl von weiteren Polymeren und deren Kombinationen in Multischichten ist heutzutage in beinahe allen Lebensbereichen allgegenwärtig.

Polymere Materialien mit allgemeinen thermochromen Eigenschaften ist gemeinsam, dass sie generell einen thermisch induzierten Farb- oder Transparenzwechsel aufweisen. So wird in der WO 02/08821 der Farbwechsel mit gleichzeitiger Intensitätsabnahme beschrieben. Die EP 1 084 860 beansprucht die Schaltung des Farbeffektes, basierend auf einem Donator-Akzeptor-Farbstoffsystem, mit mindestens zwei weiteren Komponenten. Die Änderung der Farbe erfolgt in breiten Temperaturbereichen wie zwischen -50°C bis 120°C oder -40°C bis 80°C. Das gesamte Farbstoffsystem lässt sich wahlweise auch in Form von Mikrokapseln mit einem Durchmesser von ca. 50 µm in die Polymermatrix einfügen.

Die in der US 5,527,385 offengelegten Entwicklungen beinhalten zusätzlich organische Hydrazid-, Schwefel- oder Phosphorverbindungen, die beispielsweise die mangelnde Lichtstabilität verbessern sollen. Die thermische Stabilität wird hierbei negativ beeinflusst.

Die Herstellung polymerer thermochromer Werkstoffe mit Hilfe von Aufdrucken (Kaschieren) einer thermochromen Farbe ist eine praxisnahe Lösung für einige Anforderungen und Wünsche der Verpackungsindustrie, löst jedoch nicht das gestellte Ziel. So werden gemäß der US 2002037421 Gläser mit einer Farbe zur Nutzung für den Sonnenschutz bedruckt oder entsprechend der US 4,121,010 Polymere mit einer thermochromen Farbe, bestehend aus Sulfaten, Sulfiden, Arsen, Wismut, Zink und anderen Metallen und deren Oxiden, überzogen. Hierdurch wird sowohl das Einsatzgebiet stark beschränkt als auch durch das erforderliche zusätzliche Coating (Printtechnik) eine preisreduzierende kontinuierliche Technologie verhindert. Ergänzend soll erwähnt werden, dass der Aufwand für eine Bedruckung oder Etikettierung oftmals in keinem Verhältnis zu den Herstellungskosten steht.

In Patent Abstracts of Japan, Band 1998, Nr. 01, 30. Januar 1998 (1998-01-30) -& JP 09 235545 A (Mitsubishi Chem Corp), 9. September 1997 (1997-09-09) werden eine thermochrome Polymerzusammensetzung und daraus hergestellte Artikel beschrieben.

Database WPI Section Ch, Week 200356 Thomson Scientific, London, GB; Class A89, AN 2003-594820 XP002308430 & KR 2003 016 589 A (Suntech Co. Ltd.) 3. März 2003 (2003-03-03) befasst sich mit einer polymerbasierten thermochromen Zusammensetzung und deren Verwendung in blendfreien Spiegeln.

Die EP 1 211 300 A2 betrifft thermochrome Laminate, die mindestens eine thermochrome Schicht aufweisen, in der mikroverkapselte thermochrome Pigmente dispers verteilt sind. Diese Dispersion wird dann anschlieβend mittels Druck- oder Sprühverfahren aufgebracht.

Die angeführten Lösungen in den genannten Patentschriften sind nicht geeignet, großflächige Polymerfolien mit thermochromen Eigenschaften herzustellen. Dies gilt auch für die in der EP 1 157 802 beschriebene Erfindung. Hier werden beim Extrusionsblasformen nur in Teilbereichen der Wandstärke eines Kunststoffbehältnisses thermochrome Pigmente beigemischt. Dies geschieht durch Beimischung eines reversiblen thermochromen Pigmentes in Form von streifenförmigen Einlagerungen. Die thermochromen Pigmente erfordern zudem zusätzliche thermostabile Pigmente und werden dem Extrudat vor Austritt aus dem Extrusionskopf zugegeben oder aufgegeben. Eine Durchmischung von thermochromem Material und polymerem Trägermaterial ist dementsprechend nicht möglich und wird auch nicht angestrebt.

Vorzugsweise werden thermochrome Pigmente verwendet, die bei definierter Temperatureinwirkung verblassen und im Handel verfügbar sind. Bekannterweise werden die Pigmente in der Extrudertechnologie in Form von Masterbatches zugefügt. Es ist jedoch seit vielen Jahren bekannt, dass Masterbatches basierend auf mikroverkapselten Flüssigkeiten, z.B. eingesetzt in thermochromen Tinten, oder auf flüssigkristallinen Komponenten, z.B. verwendet in Lacken oder Folien als Wärmesensoren, keine ausreichende mechanische Stabilität besitzen für den Einsatz in der Extrudertechnologie, wo die Polymerschmelze außerordentlichen mechanischen Anforderungen bei gleichzeitiger erhöhter Temperatur beim Durchlaufen der Extruderschnecke ausgesetzt ist.

Der Erfindung liegt daher die Aufgabe zu Grunde, eine völlig neuartige Polymerschicht zu schaffen, die über die gesamte Schicht gleichmäßig verteilte immanente thermochrome Eigenschaften besitzt.

Diese Aufgabe wird durch das Verfahren zur Herstellung einlagiger thermochromer Polymerfolien mit den Merkmalen des Anspruchs 1 sowie durch die thermochrome Polymerfolie mit den Merkmalen des Anspruchs 8 gelöst. In Anspruch 14 wird ein mehrlagiges Folienverbundsystem basierend auf einer erfindungsgemäßen thermochromen Polymerfolie beansprucht. Die weiteren abhängigen Ansprüche zeigen vorteilhafte Weiterbildungen auf.

Erfindungsgemäß wird diese Aufgabe gelöst, indem bereits zu Beginn des Extrusionsverfahren, d.h. vor Durchlaufen der Extruderschnecke, ergänzend ein Polymermaterial zugesetzt wird, das thermochrome Eigenschaften besitzt und gleichzeitig thermostabil und resistent gegen die beträchtlich wirkenden mechanischen Scherkräfte im Schneckenverlauf beim Aufschmelzen des Masterbatches ist.

Vorzugsweise basieren die Farbstoffe auf Grundstrukturen von Triphenylmethanfarbstoffen, Pyridiniumphenolatbetainen, Sulfophtaleinstrukturen, Reichhardt-Farbstoffe, Thyranine, Indikatorfarbstoffe, Azofarbstoffe oder Fluranfarbstoffe, wie z.B. 2-Chlor-6-Diethylamino-3-Mehtylfluran.

Als Polymere werden vorzugsweise Polyethylen, Polypropylen, Polyester, Polyamid und/oder Acrylnitril-Butadiin-Styren-Copolymer verwendet werden. Ebenso ist es aber möglich, alle bei Extrusionsverfahren gegenwärtig eingesetzten Polymere zu verwenden.

Als Schmelzmittel werden bevorzugt Octadecanol, Dodecanol, Hydroxycarbonsäuren und/oder 1-Hexadecanol verwendet. Als Entwickler kommen vorzugsweise 2,2'-bis(4-Hydroxyphenyl)propan, 2,2'-bis(4-Hydroxyphenyl)sulfon und Gallussäuredodecylester in Frage.

Die drei Komponenten werden vorzugsweise im Gewichtsverhältnis Farbstoff:Schmelzmittel:Entwickler = 1:94:5 eingesetzt.

Dieses Verfahren und die geeignete Ausführungsform der Extruderschnecke garantieren die erforderliche optimale homogene Verteilung des thermochromen Materials in der Polymerfolie. Erfindungsgemäß existiert dabei kein Konzentrationsgradient des thermochromen Materials in der resultierenden Schicht, sodass die temperaturgesteuerte Farbe keine materialbezogene, singuläre Eigenschaft der Schicht ist. Die Polymerfolie ist immanent thermochrom. Die thermochromen Eigenschaften sind nicht auf Teilbereiche beschränkt. Dies gilt ausdrücklich auch für diese Eigenschaft mit Bezug auf den Querschnitt.

Die Auswahl der verwendeten Polymermaterialien ist nur technologisch begrenzt. Alle gegenwärtig im Extrusionsverfahren eingesetzten Polymere können verwendet werden. Das thermochrome Pigment basierend auf einem polymeren Material, kann auch ohne weitere Polymerzusätze wie beispielsweise Polyethylen, Polypropylen oder Polyester, also als Einzelkomponente zur Herstellung einer thermochromen Folie verwendet werden. Als Schmelzmittel und Entwickler für die thermochromen Effekte in Zusammenwirkung mit den Pigmenten können erfindungsgemäß alle Stoffe eingesetzt werden, die diese Funktion erfüllen und die während der Extrusion weder thermisch, mechanisch oder chemisch zerstört werden. Kombinationen von Pigmenten, Schmelzmitteln und Entwicklern sind möglich.

Die Wahl des Polymeren und seine Molmasse beeinflussen die resultierenden thermochromen Eigenschaften der Schicht ebenso wie die Molekülstruktur des organischen oder anorganischen Pigmentes und der gegebenenfalls eingesetzten Entwickler und Schmelzmittel. Die spezifische Struktur-Eigenschaftsbeziehung der verwendeten Pigmente, Schmelzmittel, Entwickler und des Polymers bestimmten entscheidend den Temperaturbereich der Farbübergänge.

Die Polymerfolie kann erfindungsgemäß eine Schichtdicke im Bereich von 1 µm bis 10 cm besitzen. Bevorzugt besitzt die Polymerfolie eine Dicke von 1 µm bis 1 mm.

Es ist für den Fachmann ersichtlich, dass einerseits die Technologieparameter wie die jeweilige Temperatur im Schneckengehäuse, in der Düse, auf der Oberfläche der Chill-Roll sowie die Durchflussgeschwindigkeit im Extruder und die Abzugsgeschwindigkeiten der Chill-Roll und Wickelrolle, andererseits aber auch die spezifischen Materialeigenschaften des Polymers und der thermochromen Pigmente aufeinander optimal abgestimmt sein müssen.

Die thermochrome Monofolie mit einer beliebigen Foliendicke kann zur Modifizierung mit ergänzenden Eigenschaften mit einer weiteren Folie oder auch mit mehreren Folien kombiniert werden. Multifolien der allgemeinen Anordnung wie beispielsweise ABA oder ABCBA lassen sich fertigen. Hierbei können die einzelnen Folien die konventionelle Funktion einer Schutz- oder Sperrschicht haben. Sie können aber auch zur Herstellung weiterer temperaturgesteuerter Farbeffekte thermochrome oder nicht thermochrome Pigmente organischer oder anorganischer Art besitzen. Entsprechend der additiven oder subtraktiven Farbgestaltung lassen sich die unterschiedlichsten Farbschaltungen in vorher determinierten Temperaturbereichen erzielen. Die Farbschaltungen können über einen breiten Temperaturbereich von ΔT 1-25°C erfolgen. Vorzugsweise erfolgt der Schalteffekt in eng gehaltenen Temperaturbereichen von ΔT 1-2°C. Schaltungen sind auch im Arbeitsbereich von über 80°C möglich, was insbesondere durch die geeignete Wahl des Schmelzmittels oder deren Kombination ermöglicht wird. Die temperaturinduzierte Änderung der Intensität und des Wellenlängenmaximums kann durch zusätzliche Transluzenzeffekte ergänzt werden.

Erfindungsgemäß wird ebenso ein mehrlagiges Folienverbundsystem bereitgestellt, das mindestens eine thermochrome Polymerfolie, wie sie oben beschrieben ist und mindestens eine weitere Schicht enthält. Als weitere Folien kommen hier sämtliche im Stand der Technik bekannten Folien in Frage, die für die Extrusion geeignet sind.

Anhand der folgenden Figur und der Beispiele soll die Erfindung näher beschrieben werden.

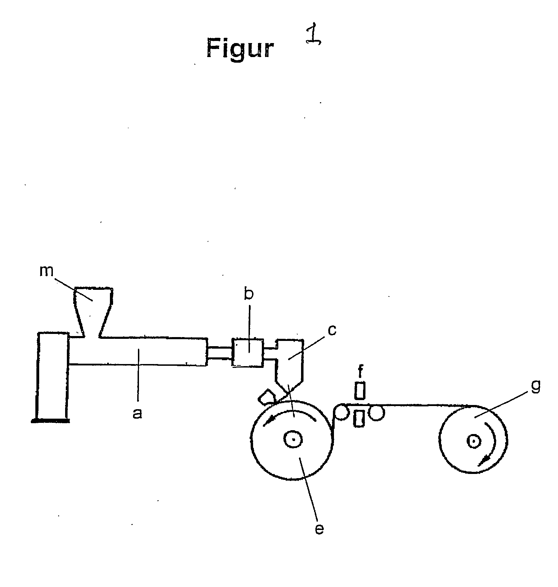

Die Figur zeigt die schematische Darstellung eines aus dem Stand der Technik bekannten Extruders. Dieser Extruder weist eine Extruderschnecke (a) auf, an der ein Bestückungstrichter (m) angeordnet ist. Über diesen Bestückungstrichter kann die Zumischung des thermochromen Farbstoffes erfolgen. Nach dem Stand der Technik erfolgen dagegen bisher Zumischungen erst über den Feedblock mit Düse (c) kurz vor Verlassen des Extruders. Die extrudierten Folien werden im Anschluss über eine Kühlwalze (e) geleitet und schließlich über die Aufwicklung (g) zu einer Rolle aufgerollt.

### Beispiel 1:

Erfindungsgemäß kann eine thermochrome Polymerfolie nach folgenden Flachfolienextrusionsverfahren hergestellt werden. Der Extrusionstrichter wird bestückt mit einem Gemisch von Polyethylen (PE-LD) und einem blauen thermochromen Pigment, welches thermisch und mechanisch stabil ist. Das Mischungsverhältnis in Gew% ist 94:6. Die Heizzonen des Extruders sind wie folgt: Zone 1 mit 175°C, Zone 2 mit 186°C und die Zonen 3, 4 und 5 mit je 194°C. Die Temperaturen am Feedblock und an der Düse 1, 2 und 3 betragen 228°C. Die Schneckendrehzahl beträgt 68 U/min. Das Polymer wird nach mehreren Minuten Verweilzeit im Extruder von der Chill-Roll mit einer Geschwindigkeit von 6,3 m/min aufgenommen bei einer Temperatur von 52 °C. Beim Aufwickeln wird die Geschwindigkeit der Folie konstant gehalten. Im Ergebnis wird eine bei Raumtemperatur blaue thermochrome Folie erhalten mit einer Foliendicke von 39 µm, die im Temperaturbereich von 38°C - 40°C reversibel von Blau nach Farblos schaltet. Die Folie ist in ihrer Gesamtheit immanent thermochrom.

### Beispiel 2:

Erfindungsgemäß kann eine Multifolie mit thermochromen Eigenschaften nach folgendem Flachfolien-Extrusionsverfahren hergestellt werden. Der Extrusionstrichter des Extruders C wird bestückt mit einem Gemisch aus Polyethylen (PE-LD) und einem roten thermochromen Pigment, welches thermisch und mechanisch stabil ist. Das Mischungsverhältnis in Gew.% ist 86:14. Der Extruder A für die Schutzfolie wird ebenfalls mit PE-LD bestückt. Extruder B, verantwortlich für die Trennfolie, wird mit Polypropylen gefüllt. Die Heizzonen des Extruders C betragen 180°C, 190°C, 195°C, 195°C und 195°C für die Zonen 1 bis 5. Am Feedblock und an der Düse betragen die Temperaturen 236°C. Die Drehzahl der Schnecke wird mit 58 U/min eingestellt. Am Extruder B sind die Temperaturen für die Zonen 1 bis 4 mit 200°C, 210°C, 220°C und 220°C festgelegt. Die Schnecke läuft mit 34 U/min. Für Extruder A beträgt die Temperatur für die erste Heizzone 182°C und für die Zonen 2 bis 5 jeweils 190°C und die Schnecke läuft mit 68 U/min. Die Chill-Roll arbeitet mit 6.0 m/min bei 55°C. Im Ergebnis wird eine bei Raumtemperatur rote thermochrome ABCBA-Folie erhalten mit einer Foliendicke von 135 µm. Die thermochrome Folie ist hierbei 45 µm dick. Die beiden Trennfolien sind jeweils 20 µm und die beiden äußeren Schutzfolien 25 µm dick. Die Polymerfolie schaltet reversibel im Temperaturbereich von 83°C - 85°C von Rot nach Farblos.

Die in den Beispielen angeführten technologischen Parameter, wie die Temperaturen in den Heizzonen, der Chill-Roll, die Drehzahl in U/min der Schnecken, die Abzugsgeschwindigkeit der Chill-Roll in m/min und die Aufwickelgeschwindigkeit lassen sich, wie für den Fachmann sofort erkennbar, in vielfältiger Art und Weise variieren und kombinieren.

### Beispiel 3:

Erfindungsgemäß kann eine Monofolie mit thermochromen Eigenschaften in Analogie zu Beispiel 1 erfolgen. Hierbei wird eine 50 mm-Bretschlitzdüse verwendet und die Chill-Rolle ist nicht in Betrieb. Die Schneckendrehzahl beträgt 93 U/min. Im Ergebnis wird eine Folie mit einer Dicke von 0,28 cm erhalten.

## Patentansprüche

1. Verfahren zur Herstellung einlagiger thermochromer Polymerfolien mittels Extrusion, bei dem mindestens ein Farbstoff und gegebenenfalls weitere Zusatzstoffe, wie Schmelzmittel und/oder Entwickler, einem Polymer zu Beginn des Extrusionsverfahrens derart zugemischt und zur thermochromen Polymerfolie extrudiert wird, dass kein Konzentrationsgradient des thermochromen Materials in der resultierenden Folie vorhanden ist.

2. Verfahren nach Anspruch 1,
**dadurch gekennzeichnet, dass** als Polymer Polyethylen, Polypropylen, Polyester, Polyamid und/oder Acrylnitril-Butadien-Styren-Copolymer verwendet wird.

3. Verfahren nach einem der Ansprüche 1 oder 2,
**dadurch gekennzeichnet, dass** als Farbstoffe Pyridiniumphenolatbetaine, Sulfophtaleinstrukturen, Reichardt-Farbstoffe, Triphenylmethan-Farbstoffe, Pyranine, Indikatorfarbstoffe, Fluranfarbstoffe oder Azofarbstoffe verwendet werden.

4. Verfahren nach einem der Ansprüche 1 bis 3,
**dadurch gekennzeichnet, dass** als Schmelzmittel Octadecanol, Dodecanol, Hydroxycarbonsäuren und/oder 1-Hexadecanol verwendet wird.

5. Verfahren nach einem der Ansprüche 1 bis 4,
**dadurch gekennzeichnet, dass** als Entwickler 2,2'-Bis(4-hydroxyphenyl)propan, 2,2'-Bis(4-hydroxyphenyl)sulfon und/oder Gallussäuredodecylester eingesetzt wird.

6. Verfahren nach einem der Ansprüche 1 bis 5,
**dadurch gekennzeichnet, dass** der Farbstoff dem Polymer im Bestückungstrichter zugemischt wird.

7. Verfahren nach einem der Ansprüche 1 bis 6,
**dadurch gekennzeichnet, dass** der Farbstoff, das Polymer und gegebenenfalls weitere Zusatzstoffe in Form eines Masterbatches eingesetzt werden.

8. Extrudierte thermochrome Polymerfolie enthaltend mindestens einen Farbstoff und gegebenenfalls weitere Zusatzstoffe sowie ein Polymer, **dadurch gekennzeichnet, dass** kein Konzentrationsgradient des thermochromen Materials in der Polymerfolie vorhanden ist.

9. Polymerfolie nach Anspruch 8,
**dadurch gekennzeichnet, dass** eine reversible Farbschaltung in einem breiten Temperaturbereich von ΔT von 1 bis 25°C erfolgt.

10. Polymerfolie nach Anspruch 8,
**dadurch gekennzeichnet, dass** eine reversible Farbschaltung in einem engen Temperaturbereich von ΔT von 1 bis 2°C erfolgt.

11. Polymerfolie nach einem der Ansprüche 8 bis 10,
**dadurch gekennzeichnet, dass** die Farbschaltung von einem veränderten Transluzenzverhalten begleitet wird.

12. Polymerfolie nach einem der Ansprüche 8 bis 11,
**dadurch gekennzeichnet, dass** die Schicht eine Schichtdicke von 1 µm bis 10 cm besitzt.

13. Polymerfolie nach Anspruch 12,
**dadurch gekennzeichnet, dass** die Schichtdicke von 1 µm bis 1 mm beträgt.

14. Mehrlagiges Folienverbundsystem enthaltend mindestens eine thermochrome Polymerfolie nach einem der Ansprüche 8 bis 13 und mindestens eine weitere Folie.

## Claims

1. Method for the production of single-layer thermochromic polymer films by means of extrusion, in which at least one colourant and possibly further additives, such as melting agents and/or developers, is added to a polymer at the beginning of the extrusion process and is extruded to form the thermochromic polymer film such that no concentration gradient of the thermochromic material is present in the resulting film.

2. Method according to claim 1,
**characterised in that** there is used as polymer, polyethylene, polypropylene, polyester, polyamide and/or acrylonitrilebutadiene-styrene copolymer.

3. Method according to one of the claims 1 or 2,
**characterised in that** there are used as colourants, pyridinium phenolate betaines, sulphophthalein structures, Reichardt colourants, triphenylmethane colourants, pyranines, indicator dyes, fluoran dyes or azo pigments.

4. Method according to one of the claims 1 to 3,
**characterised in that** there is used as melting agent, octadecanol, dodecanol, hydroxycarboxylic acids and/or 1-hexadecanol.

5. Method according to one of the claims 1 to 4,
**characterised in that** there is used as developer, 2,2'-bis(4-hydroxyphenyl)propane, 2,2'-bis(4-hydroxyphenyl)sulphone and/or gallic acid dodecyl ester.

6. Method according to one of the claims 1 to 5,
**characterised in that** the colourant is mixed into the polymer in the equipping funnel.

7. Method according to one of the claims 1 to 6,
**characterised in that** the colourant, the polymer and possibly further additives are inserted in the form of a master batch.

8. Extruded thermochromic polymer film comprising at least one colourant and possibly further additives and also a polymer, **characterised in that** no concentration gradient of the thermochromic material is present in the polymer film.

9. Polymer film according to claim 8,
**characterised in that** a reversible colour switch is effected in a broad temperature range of ΔT of 1 to 25°C.

10. Polymer film according to claim 8,
**characterised in that** a reversible colour switch is effected in a narrow temperature range of ΔT of 1 to 2°C.

11. Polymer film according to one of the claims 8 to 10,
**characterised in that** the colour switch is accompanied by an altered translucency behaviour.

12. Polymer film according to one of the claims 8 to 11,
**characterised in that** the layer has a layer thickness of 1 µm to 10 cm.

13. Polymer film according to claim 12,
**characterised in that** the layer thickness is of 1 µm to 1 mm.

14. Multilayer film composite system comprising at least one thermochromic polymer film according to one of the claims 8 to 13 and at least one further film.

## Revendications

1. Procédé pour la fabrication de feuilles polymères thermochromiques monocouches par extrusion, dans lequel au moins un colorant et éventuellement d'autres additifs, tels que des fondants et/ou des révélateurs, sont ajoutés à un polymère au début de l'opération d'extrusion et sont extrudés pour donner une feuille polymère thermochromique, de telle sorte qu'il n'y ait aucun gradient de concentration du matériau thermochromique dans la feuille obtenue.

2. Procédé selon la revendication 1, **caractérisé en ce qu'**on utilise en tant que polymère un polyéthylène, un polypropylène, un polyester, un polyamide et/ou un copolymère acrylonitrile-butadiène-styrène.

3. Procédé selon l'une des revendications 1 ou 2, **caractérisé en ce qu'**on utilise en tant que colorants des bétaïne-phénolates de pyridinium, des structures de sulfonephtaléines, des colorants de Reichhardt, des colorants de triphénylméthane, des puranines, des colorants indicateurs, des colorants de fluoranne ou des colorants azoïques.

4. Procédé selon l'une des revendications 1 à 3, **caractérisé en ce qu'**on utilise en tant que fondant de l'octadécanol, du dodécanol, des acides hydroxycarboxyliques et/ou du 1-hexadécanol.

5. Procédé selon l'une des revendications 1 à 4, **caractérisé en ce qu'**on utilise en tant que révélateur du 2,2'-bis(4-hydroxyphényl)propane, de la 2,2'-bis(4-hydroxyphényl)sulfone et/ou du gallate de dodécyle.

6. Procédé selon l'une des revendications 1 à 5, **caractérisé en ce que** le colorant est mélangé au polymère dans la trémie d'alimentation.

7. Procédé selon l'une des revendications 1 à 6, **caractérisé en ce que** le colorant, le polymère et éventuellement les autres additifs sont utilisés sous la forme d'un mélange-maître.

8. Feuille polymère thermochromique extrudée contenant au moins un colorant et éventuellement d'autres additifs, ainsi qu'un polymère, **caractérisé en ce qu'**il n'y a aucun gradient de concentration du matériau thermochromique dans la feuille polymère.

9. Feuille polymère selon la revendication 8, **caractérisée en ce qu'**une commutation réversible de couleur a lieu dans une large plage de températures Δt de 1 à 25°C.

10. Feuille polymère selon la revendication 8, **caractérisée en ce qu'**une commutation réversible de couleur a lieu dans une étroite plage de températures Δt de 1 à 2°C.

11. Feuille polymère selon l'une des revendications 8 à 10, **caractérisée en ce que** la commutation de couleur est accompagnée d'une modification du comportement relatif à la translucidité.

12. Feuille polymère selon l'une des revendications 8 à 11, **caractérisé en ce que** la couche présente une épaisseur de couche de 1 µm à 10 cm.

13. Feuille polymère selon la revendication 12, **caractérisé en ce que** l'épaisseur de couche est de 1 µm à 1 mm.

14. Système composite de feuilles multicouches contenant au moins une feuille polymère thermochromique selon l'une des revendications 8 à 13 et au moins une feuille supplémentaire.
